(19) Europäisches Patentamt
European Patent Office
Office européen des brevets

(11) **EP 3 570 354 A1**

(12) **EUROPEAN PATENT APPLICATION**
published in accordance with Art. 153(4) EPC

(43) Date of publication:
20.11.2019 Bulletin 2019/47

(51) Int Cl.:
*H01M 8/0202* (2016.01)   *H01M 8/18* (2006.01)

(21) Application number: 17888763.4

(22) Date of filing: 27.12.2017

(86) International application number:
**PCT/JP2017/046928**

(87) International publication number:
**WO 2018/124186 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: 28.12.2016 JP 2016255378

(71) Applicant: Showa Denko K.K.
Tokyo 105-8518 (JP)

(72) Inventor: TOMITA, Miyuki
Tokyo 105-8518 (JP)

(74) Representative: Strehl Schübel-Hopf & Partner
Maximilianstrasse 54
80538 München (DE)

(54) **CURRENT COLLECTOR PLATE, REDOX FLOW CELL, AND REDOX FLOW CELL PRODUCTION METHOD**

(57)    A current collector plate is disclosed that has an erect positioning pin on at least one surface of the current collector plate.

FIG. 4

# Description

## Technical Field

The present invention relates to a current collector plate, a redox flow cell, and a redox flow cell production method.

Priority is claimed on Japanese Patent Application No. 2016-255378, filed on December 28, 2016, the content of which is incorporated herein by reference.

## Background Art

A redox flow cell is known as a high-capacity storage battery. Typically, the redox flow cell has an ion-exchange membrane that separates an electrolyte, and electrodes that are provided on both sides of the ion-exchange membrane. A positive electrolyte and a negative electrolyte are supplied to each of both sides with the ion-exchange membrane interposed therebetween, that is, a positive electrolyte compartment and a negative electrolyte compartment. An oxidation reaction and a reduction reaction simultaneously progress on the electrodes of both sides, and thus, the redox flow cell is charged and discharged.

As described above, in such a redox flow cell, the electrode is stored in each electrode compartment. The redox flow cell operates such that the electrolyte is supplied to the electrode compartment and the electrolyte circulates through the redox flow cell. Electrons are transferred to the electrodes from ions in the electrolyte, and the electrons are transferred to the outside of the redox flow cell from the electrodes. At this time, protons are transferred to the other electrode compartment via the ion-exchange membrane. The redox flow cell is charged and discharged via flow of the electrons and the protons.

The redox flow cell is produced by sequentially stacking a current collector, the electrode, and the ion-exchange membrane, which are separate members, on top of each other, and interposing the stacked body in a stacking direction (for example, Patent document 1 and Patent document 2).

## Citation List

### Patent Literature

Patent document 1: Japanese Unexamined Patent Application, First Publication No. 2015-122231
Patent document 2: Published Japanese Translation No. 2015-505147 of the PCT International Publication

# SUMMARY OF INVENTION

## Technical Problem

When separate members are assembled in the production of a redox flow cell, a positional alignment between the separate members is required. If the position of the electrode shifts with respect to the position of the current collector plate, the flow of the electrolyte occurs which flows without passing through the electrode, and charge and discharge capacity of the redox flow cell decreases.

The present invention has been made in view of such circumstances, and an object of the present invention is to suppress the shift of an electrode in an in-plane direction during assembly of a redox flow cell.

## Solution to Problem

The inventors of the present invention have found that it is possible to suppress the shift of an electrode in an in-plane direction during assembly of a redox flow cell by providing a pin for positioning on a current collector plate provided in an electrode compartment.

That is, the present invention provides the following means to solve the above-described problems.

A first aspect of the present invention is a current collector plate described below.

(1) A current collector plate according to a first aspect includes an erect positioning pin on at least one surface of the current collector plate.
The current collector plate according to the first aspect of the present invention preferably includes the following features. The following features are also preferably combined with each other as required.
(2) The current collector plate according to the above aspect further includes a peripheral edge wall surrounding a predetermined region on the at least one surface of the current collector plate, in which the positioning pin may be provided on a first surface of the peripheral edge wall provided on the at least one surface side.
(3) In the current collector plate according to the above aspect, a first principal surface as the one surface and a second principal surface are provided, and the positioning pin may be provided on both the principal surfaces.
A second aspect of the present invention is a redox flow cell as follows.
(4) A redox flow cell according to a second aspect includes an ion-exchange membrane, the current collector plate according to the first aspect, and an electrode disposed between the ion-exchange membrane and the current collector plate, in which a position of the electrode in an in-plane direction is fixed by the positioning pin of the current collector plate.
(5) In the redox flow cell according to the above aspect, the electrode may have a positioning hole at a position corresponding to the positioning pin.

A third aspect of the present invention is a production method of a redox flow cell as follows.

(6) A production method of a redox flow cell according to a third aspect wherein the redox flow cell includes an ion-exchange membrane, electrodes sequentially disposed so as to interpose the membrane therebetween, and a current collector plate, the method including a step of preparing a current collector plate having an erect positioning pin on at least one surface of the current collector plate, or installing a positioning pin on one surface of a current collector plate, and a step of stacking an electrode on a surface on which the positioning pin is formed, and fixing a position of the electrode in an in-plane direction.

A fourth aspect of the present invention is a production method of a redox flow cell as follows.

(7) A production method of a redox flow cell according to a fourth aspect wherein the redox flow cell includes an ion-exchange membrane, electrodes sequentially disposed so as to interpose the membrane therebetween, and a current collector plate, the method includes a step of stacking an electrode on one surface of a current collector plate, and a step of fixing the current collector plate and the electrode by a positioning pin. The one surface of the current collector plate may be considered as a first principal surface of the current collector plate.

(8) It is preferable that the predetermined region of above-described (2) be a recessed portion, and a distance between an electrode and a surface of the recessed portion facing the electrode be longer than a distance between the electrode and a surface of the peripheral edge wall facing the electrode.

Advantageous Effects of Invention

In the redox flow cell according to the above aspects, shift of the electrode in the in-plane direction can be suppressed during assembly of the redox flow cell.

Brief Description of Drawings

FIG. 1 is a schematic cross-sectional view of an example of a redox flow cell of a first embodiment.
FIG. 2 is a schematic cross-sectional view obtained by cutting a preferable example of a current collector plate in the redox flow cell of the first embodiment.
FIG. 3 is a schematic plan view of a preferable example of the current collector plate stored in a cell frame in the redox flow cell of the first embodiment, as viewed in a stacking direction.
FIG. 4 is an enlarged schematic perspective view of a main part (a part) of a preferable example of the current collector plate in the redox flow cell of the first embodiment.

FIG. 5 is a schematic cross-sectional view obtained by cutting another preferable example of the current collector plate in the redox flow cell of the first embodiment.
FIG. 6 is a schematic cross-sectional view obtained by cutting the redox flow cell of the first embodiment shown in FIG. 3 along an A-A plane, in which a preferable example of the current collector plate stored in the cell frame is provided with an electrode and an ion-exchange membrane thereon.
FIG. 7 is a schematic view illustrating a flow of an electrolyte in the redox flow cell of the first embodiment.

Description of Embodiments

Hereinafter, preferable examples of a current collector plate, a redox flow cell, and a production method thereof are described in detail with reference to drawings.
In the drawings referenced in the description hereinafter, characteristic parts may be magnified for illustrative purposes for easy understanding of the characteristics of the present invention, and a dimension, a ratio and the like of each configuration element may differ from an actual value. Materials, dimensions and the like exemplified in the description hereinafter are simply examples, and the present invention is not limited to the exampless. Modifications can be appropriately made without departing from requirements of the present invention.

(First Embodiment)

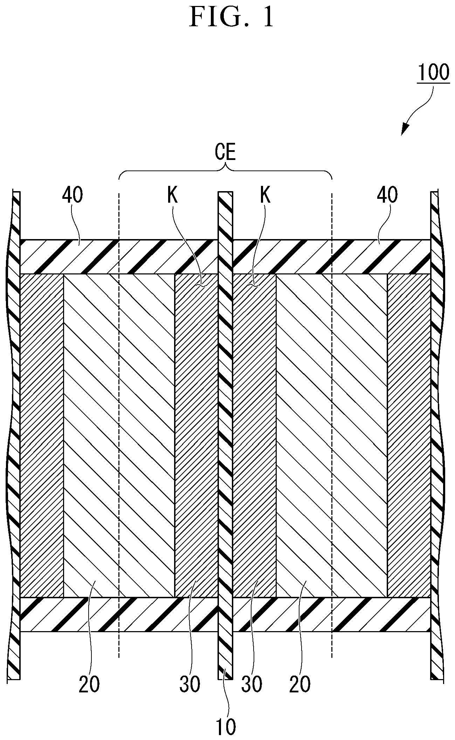

FIG. 1 is a schematic cross-sectional view of a redox flow cell of a first embodiment.
A redox flow cell 100 illustrated in FIG. 1 has an ion-exchange membrane 10, a current collector plate 20, and an electrode 30. The circumference of the current collector plate 20 and that of the electrode 30 are surrounded by a cell frame 40. The electrode 30 is provided in an electrode compartment K formed by the ion-exchange membrane 10, the current collector plate 20, and the cell frame 40. The cell frame 40 prevents an electrolyte supplied to the electrode compartment K from leaking to the outside.
The redox flow cell 100 illustrated in FIG. 1 has a cell-stack structure where a plurality of single cells CE are stacked on top of each other. The cell frame 40 and the current collector plate 20 may form a part of another cell CE adjacent to the cell CE in FIG. 1. The number of stacks of the single cells CE can be appropriately changed depending on applications; however, a configuration having only one single cell may be adopted. If the plurality of single cells CE are connected together in series, a practical voltage is obtained. One single cell CE includes the ion-exchange membrane 10, two electrodes 30, which is served as a positive electrode and negative electrode by which the ion-exchange membrane 10 is interposed therebetween, and two current collector plates 20 by which the two electrodes 30 are interposed therebetween.

In such a structure, electrolytes from a tank of the positive electrolyte and a tank of the negative electrolyte (which are not shown) may be circulated through each cell by each pump (not shown).

The current collector plate 20 is provided on a surface side opposing the ion-exchange membrane side, among the surfaces (principal surface) of each electrode. The end part of the electrode and the current collector plate can be preferably covered by the cell frame 20. Although not clear in FIG. 1, in the cell CE, a space into which the electrolyte flows exists in each of the electrode compartments on the positive electrode side and the negative electrode side. Depending on the configuration of the cell, the electrolyte can flow between the ion-exchange membrane 10 and the electrode 30, and can flow in the electrode.

Hereinafter, a stacking direction of the cell-stack structure in which the single cells CE are stacked on top of each other may be simply referred to as a "stacking direction", and the direction of a plane vertical to the stacking direction of the cell-stack structure may be simply referred to as an "in-plane direction".

[Ion-exchange Membrane]

The type of ion-exchange membrane 10 can be optionally selected, and preferably, a cation-exchange membrane can be used as the ion-exchange membrane 10. Specifically, a perfluorocarbon polymer having a sulfo group, a hydrocarbon-based polymer compound having a sulfo group, a polymer compound doped with an inorganic acid such as a phosphoric acid, an organic/inorganic hybrid polymer wherein a part of which is substituted with a proton-conductive functional group, and a proton conductor in which polymer matrices are impregnated with a phosphoric acid solution or a sulfuric acid solution, and the like can be cited as usable examples thereof. Among them, a perfluorocarbon polymer having a sulfo group is preferably used, and a Nafion (a registered trademark) is more preferably used.

[Current Collector Plate]

The current collector plate 20 is a current collector body having the function of transferring electrons from and to the electrode 30. If both surfaces of the current collector plate 20 can be used as a current collector body, the current collector plate 20 may be referred to as a bipolar plate. The current collector plate of the embodiment can be more preferably used in a redox flow cell.

The material of the current collector plate 20 can be optionally selected, and preferably, a conductive material can be used. For example, a conductive material containing carbons can be used. Specifically, examples of the material include conductive resin comprising graphite and an organic polymer compound, conductive resin comprising the graphite and the compound in which a part of the graphite is substituted with at least one of a carbon black and diamond-like carbon, or a mold material obtained by kneading carbon and resin. Among the materials, a mold material obtained by kneading carbon and resin is preferably used.

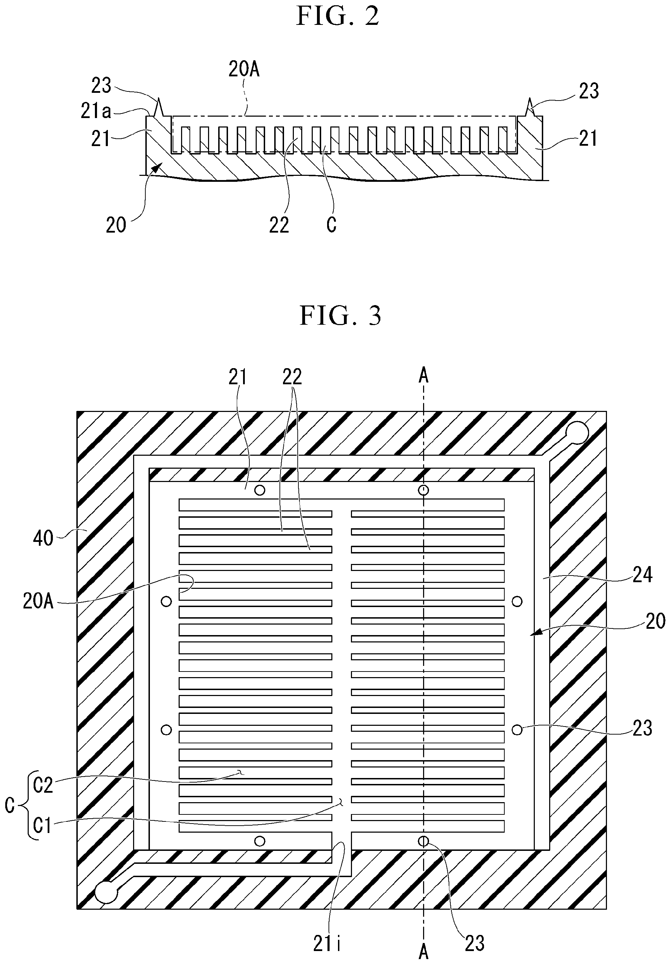

FIG. 2 is a schematic cross-sectional view of the current collector plate of the redox flow cell of the first embodiment. The current collector plate 20 illustrated in FIG. 2 has a peripheral edge wall 21 and an internal wall 22 on one principal surface thereof. If necessary, the peripheral edge wall 21 and the internal wall 22 may be provided on both principal surfaces thereof. The peripheral edge wall 21 surrounds a predetermined region and has a recessed portion 20A (a dent portion) inside the wall. The recessed portion 20A is an area defined by the peripheral edge wall 21. It is preferable that a distance between the electrode 30 and a surface of the recessed portion 20A facing the electrode 30 be longer than a distance between the electrode 30 and a surface (21a) of the peripheral edge wall 21 facing the electrode 30. Also, it is preferable that a distance between the surface (21 a) of the peripheral edge wall 21 facing the electrode and the ion-exchange membrane 10 be longer than a distance between the cell frame 40 and the ion-exchange membrane 10.

The first surface 21a of the peripheral edge wall 21 (an upper surface facing the electrode 30) is provided with the positioning pin 23 erecting from the first surface 21a in the stacking direction. The side surface of the peripheral edge wall 21 may be referred to as a second surface.

In a preferable example of the current collector plate 20 of the present invention, when the current collector plate 20 has a square shape such as foursquare or rectangle (as viewed from the stacking direction), four side parts (a frame-type part) of at least one principal surface among the principal surfaces of the current collector plate 20 may be provided with, as an edge part, the continuous peripheral edge wall 21, which has a cross section of a square column. A width of the first surface 21a of the peripheral edge wall 21 is optionally determined.

A region surrounded by the peripheral edge wall 21 (recessed portion 20A) preferably has the groove portion C and the internal wall 22. A bottom part of the groove portion C may be flat. the internal wall 22 may have a cross section of a square column. Also, the surface of the internal wall facing the electrode may be flat. The flat surface may be located at a position farther from the opposed electrode than the first surface 21a of the peripheral edge wall 21.

FIG. 2 illustrates an example of the current collector plate 20. The configuration of the current collector plate of the present invention is not limited to the configuration illustrated in FIG. 2, and can have various configurations. For example, the current collector plate of the present invention may adopt a configuration not having the internal wall 22, or a configuration not having the predetermined structure (the peripheral edge wall 21 and the internal wall 22). However, in any configuration, the positioning pin 23 is required to be provided on at least one principal surface of the current collector plate 20. For example, in addition to the structure in FIG. 2, the positioning pin 23 may be providing on an upper surface of the internal wall 22. Alternatively, instead of the positioning pin 23 in FIG. 2, the positioning pin 23 may be provided on an upper surface of the internal wall 22. Also, in the configuration not having the internal wall 22 and the peripheral edge wall 21, the positioning pin 23 may be randomly provided on the principal surface of the current collector plate 20 facing the electrode 30, or may be provided on end part of the principal surface of the current collector plate 20 facing the electrode 30.

Hereinafter, a preferable example of the current collector plate will be described in more detail using a configuration of FIG. 3.

FIG. 3 is a schematic plan view of a state where the current collector plate 20 in FIG. 2 is stored in the cell frame 40, as viewed in a stacking direction. FIG. 2 is a view corresponding to a section cut along the A-A plane in FIG. 3.

A plurality of the groove portions C are provided on a surface of the current collector plate 20 on the ion-exchange membrane 10 side. A wall portion (internal wall 22) is provided at a position between grooves of the plurality of the groove portions C. Because the internal wall 22 is provided, the electrolyte is easily supplied throughout the recessed portion 20A. The shape of the groove portion C and the shape of the internal wall 22 regulated by the plurality of the groove portions C are not limited to a specific shape.

The internal wall 22 illustrated in FIG. 3 has a first groove portion C1 and a second groove portion C2, wherein the first groove portion C1 is a part of the groove portion C extending from the opening portion 21i in one direction, and the second groove portion C2 is connected with the first groove portion C1 and branches from the first groove portion C1 in a direction intersecting the first groove portion C1.

An electrolyte is supplied from an opening portion 21i of the peripheral edge wall 21 into the recessed portion 20A surrounded by the peripheral edge wall 21. The electrolyte supplied from the opening portion 21i of the peripheral edge wall 21 flows along the first groove portion C1, and flows to diffuse in the second groove portion C2. Because the electrolyte flows along the groove portion C, it easily diffuses in the in-plane direction of the recessed portion 20A. It may be considered that the lower left circle of the cell frame 40 is an inlet port of the electrolyte and an upper right circle thereof is an outlet port.

Preferably, the electrolyte diffuses throughout the recessed portion 20A, and then is exhausted from an exhaust path 24. Because the electrolyte diffuses throughout the recessed portion 20A in the in-plane direction, the electrode 30 can be used on the entire surface of the recessed portion in the in-plane direction. As a result, a cell resistance of the redox flow cell decreases, and charge and discharge characteristics are improved.

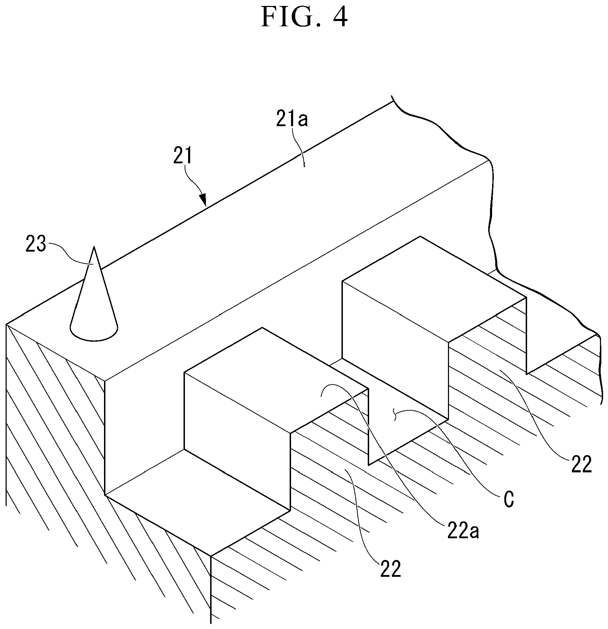

FIG. 4 is an enlarged perspective view of a main part (a part) of the current collector plate 20. The positioning pin 23 erects on the first surface 21a of the peripheral edge wall 21 illustrated in FIG. 4. The positioning pin 23 is inserted into the electrode 30 described later, and fixes the position of the electrode 30 in the in-plane direction. The electrode 30 may have a positioning hole at a position corresponding to each of the positioning pin 23.

The positioning pin 23 may be integrally formed with the current collector plate 20 or may be formed to be separable from the current collector plate 20. The current collector plate having the erect positioning pin on at least one surface thereof (preferably, on a first principal surface) may have a configuration that at least a part of the positioning pin 23 penetrates the current collector plate, is in contact with the current collector plate, or is integrated with the current collector body.

If the positioning pin is separable from the current collector plate, in a state where a screw hole into which the positioning pin 23 is inserted is formed in the current collector plate, the positioning pin 23 may be fixed to the screw hole, as a male screw and a female screw, respectively. The shape of the positioning pin 23 is not limited to a specific shape, but it is preferable that the positioning pin 23 have a column shape such as a triangular column, a quadrangular column, or a cylinder, or a conical shape such as a triangular cone, a quadrangular cone, or a circular cone. It is more preferable that the positioning pin 23 have a conical shape expanded toward the first surface 21a of the peripheral edge wall 21 from one end. If the positioning pin 23 has a conical shape, the pin is easily inserted into the electrode.

Although the height of the positioning pin 23 can be optionally determined, it is preferable that the positioning pin 23 have such a height that causes the ion-exchange membrane 10 not to be broken through when the redox flow cell 100 is assembled. For example, in the configuration of FIG. 4, it is preferable that the positioning pin 23 have a height that is equal to or less than a height of a perpendicular line dropped from the ion-exchange membrane 10 to the first surface 21a of the peripheral edge wall 21 when assembly of the redox flow cell 100 is completed. Also, when the redox flow cell 100 is assembled, the positioning pin 23 preferably has a height lower than the thickness of the electrode 30; however, depending on situations, the pin may have a height larger than the thickness of the electrode 30. If the positioning pin 23 breaks the ion-exchange membrane 10, a leak of the electrolyte occurs, and thus a charge and discharge capacity may decrease.

The positioning pin 23 is preferably formed of a material resistant to the electrolyte. For example, a vanadium electrolyte is generally used in the redox flow cell. In this case, the positioning pin 23 is required to have an acid resistance. Examples of materials resistant to the electrolyte include a material coated with a fluororesin coating agent, phenol resin-based acid-resistant resin, a glass, a material used in the current collector plate 20, or the like. Among the above-described materials, a conductive material is preferably used as the material of the positioning pin 23.

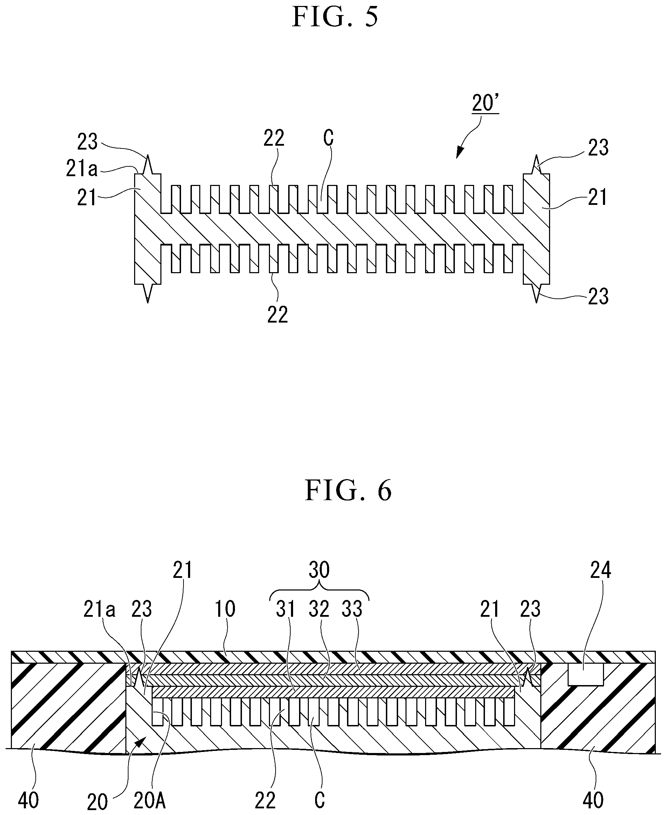

An arrangement and the number of the positioning pins 23 are not particularly limited. For example, 1 to 60 positioning pins are mentioned, specifically, 2 to 40 pins are preferable, 2 to 20 pins are more preferable, and 2 to 10 pins are still more preferable. More specifically, the number of the positioning pins 23 may be either 2, 4, 6, 8, 10, 12, or 14, but is not limited thereto. Regarding positions, it is preferable that the positioning pins be provided at positions that are vertically and/or horizontally symmetrical with respect to a center of the current collector plate 20 in the in-plane direction as illustrated in FIG. 3. By providing the positioning pins at symmetric position, even when a stress is applied in any direction of the in-plane direction, the applied stress can be distributed symmetrically in the in-plane direction. When the positioning pins 23 are provided on the first surface 21a, it is preferable that the numbers of the positioning pins 23 in the vicinity of each of four sides of the first surface 21a be the same as one another, or the numbers of the positioning pins 23 in the vicinity of each of two facing sides be the same as each other. As illustrated in FIG. 5, in a case where the current collector plate 20' is a bipolar plate, the positioning pin 23 may be provided on two surfaces (two principal surfaces) of the bipolar plate. The position and number of the positioning pin 23 on the bipolar plate are not particularly limited; however, the two surfaces preferably have the above-described features.

The positioning pin 23 may be provided on a part other than the first surface 21a of the peripheral edge wall 21 if the part directly contacts with the electrode 30 described below. For example, the first surface 22a (an upper surface) of the internal wall 22 also comes in direct contact with the electrode 30, described below. Therefore, the positioning pin 23 may be provided on the first surface 22a of the internal wall 22. A side surface of the internal wall 22 may be referred to as a second surface.

If the positioning pins 23 are provided on the first surface 21a of the peripheral edge wall 21 and the first surface 22a of the internal wall 22, the position of the electrode 30 is fixed by the internal part and the outer peripheral part in the in-plane direction, thus shift of the electrode 30 in the in-plane direction is suppressed. When the positioning pins 23 are provided on both the first surface 21a and the first surface 22a, the number of the positioning pins 23 may be the same as each other, the number of the positioning pins 23 on the first surface 21a may be larger or smaller than that on the first surface 22a.

The shapes of the peripheral edge wall 21 and the internal wall 22 are not limited to a specific shape, and can be optionally selected. Although the cross sections of the peripheral edge wall 21 and the internal wall 22 is illustrated as a rectangle in FIG. 4, it may be semicircular or triangular.

The width of the internal wall 22 can be optionally determined, but preferably is greater than or equal to 0.5 mm and less than or equal to 30 mm, and more preferably greater than or equal to 0.5 mm and less than or equal to 10 mm. The electrolyte is supplied along the groove portion C. For this reason, it is possible to relatively increase the width of the groove portion C by decreasing the width of the internal wall 22. If the width of the groove portion C increases, an occurrence of turbulent flows can be suppressed.

The internal wall 22 forms a flow path for a flow of the electrolyte. For this reason, it is possible to ensure sufficient strength by designing the internal wall 22 to have a certain level of thickness. As a result, there are advantages such as being easily processed.

[Electrode]

FIG. 6 is a schematic cross-sectional view obtained by cutting the redox flow cell of the first embodiment shown in FIG. 3 along an A-A plane, in which the current collector plate stored in the cell frame is provided with an electrode and an ion-exchange membrane thereon.

The electrode 30 can be made from a conductive sheet containing carbon fibers. The carbon fiber referred herein is fibrous carbon, and examples of the fibrous carbon include carbon fibers and carbon nanotubes. If the electrode 30 contains carbon fibers, a contact area between the electrolyte and the electrode 30 increases, and reactivity of the redox flow cell 100 increases.

The conductive sheet containing the carbon nanotubes is preferably used. Particularly, if the electrode 30 contains carbon nanotubes having a diameter less than or equal to 1 $\mu$m, a fiber diameter of the carbon nanotube is small, and thus it is possible to increase the contact area between the electrolyte and the electrode 30. On the other hand, if the electrode 30 contains carbon fibers having a diameter greater than or equal to 1 $\mu$m, the conductive sheet becomes strong and is hardly broken. The conductive sheet containing carbon fibers can be made from, for example, carbon felt, carbon paper, or carbon-nanotube sheet.

The electrode 30 may have a single layer structure or a multi-layer structure in the stacking direction. As illustrated in FIG. 6, the electrode 30 may have the first electrode 31, a second electrode 32, and a liquid outlet layer 33 which are sequentially disposed from the side of the current collector plate 20. The number of electrode layers is not limited thereto, and may be optionally selected. The number of layers may be, for example, 2 to 7, 2 to 5, or 2 to 3.

The first electrode 31 is fitted in the recessed portion 20A of the current collector plate 20. The first electrode 31 is present closer to the current collector plate 20 than a first surface 21a (an exposed surface of the edge wall on the side of one surface where the internal wall 22 is formed (an upper surface side viewed in the drawing)) of the peripheral edge wall 21. The second electrode 32 is disposed closer to the ion-exchange membrane 10 than the first surface 21a of the peripheral edge wall 21, and is provided so as to cover throughout a region surrounded by the cell frame 40. The liquid outlet layer 33 is provided so as to cover throughout the region surrounded by the cell frame 40, and allows the electrolyte to easily flow therethrough when compared to the second electrode 32. The liquid outlet layer 33 may be a porous sheet having a large number of holes for permeation of liquid, and may not necessarily have conductivity.

The position of the electrode 30 in the in-plane direction is fixed by the positioning pin 23. By fixing the position of the electrode 30 in the in-plane direction using the positioning pin 23, it is possible to prevent the electrode 30 from being deviated from a predetermined position with respect to the current collector plate 20 during assembly of the redox flow cell 100.

If the electrode 30 is shifted in the in-plane direction with respect to the current collector plate 20 from the predetermined position, gaps are formed between the recessed portion 20A and the first electrode 31, and between the cell frame 40, the second electrode 32, and the liquid outlet layer 33. Such gaps cause the flow of the electrolyte that cannot contribute to the reaction.

By suppressing the shift of the electrode 30 by the positioning pin 23, it is possible to prevent the generation of the flow of the electrolyte which does not pass through the electrode 30, and to improve charge and discharge characteristics of the redox flow cell.

The electrode 30 is preferably made of carbon fibers. Therefore, the positioning pin 23 can be easily inserted into the electrode 30. In a case where the electrode is configured as illustrated in FIG. 6 and the positioning pin 23 is provided on the first surface 21a of the peripheral edge wall 21, the pins are preferably inserted into both the second electrode 32 and the liquid outlet layer 33. Also, in a case where the positioning pin 23 is provided on the first surface 22a of the internal wall 22, the pins are preferably inserted into all of the first electrode 31, the second electrode 32, and the liquid outlet layer 33. In this case, at least one positioning pin 23 may be inserted into all of the first electrode 31, the second electrode 32, and the liquid outlet layer 33. Alternatively, at least one positioning pin 23 may be inserted into the first electrode 31, or into both the first electrode 31 and the second electrode 32, and another at least one positioning pin 23 may be inserted into the second electrode 32, or into both the second electrode 32 and the liquid outlet layer 33.

The first electrode 31 preferably has a liquid permeability greater than that of the second electrode 32. If the liquid permeability of the first electrode 31 in the in-plane direction is greater than that of the second electrode 32 in the stacking direction, a flow of the electrolyte flowed into the electrode compartment K is restricted by the second electrode 32, and the electrolyte diffuses in the in-plane direction. If the electrolyte diffuses throughout the recessed portion 20A in the in-plane direction, the electrolyte more uniformly and easily flows to the entire surface of the second electrode 32.

The liquid outlet layer 33, which is porous, guides the electrolyte flowed out from the second electrode 32 to the exhaust path. For this reason, the liquid outlet layer 33 preferably has a liquid permeability greater than that of the second electrode 32. If the liquid permeability of the liquid outlet layer 33 in the in-plane direction is greater than that of the second electrode 32 in the stacking direction, a difference in a flow of the electrolyte in the second electrode 32 in the vicinity of the exhaust path 24 becomes small. As a result, charge and discharge reactions can occur on the entire surface of the second electrode 32, and the cell resistance decreases. If the liquid outlet layer 33 is made from a conductive material, and serves as an electrode (a third electrode) which is a part of the electrode 30, the cell resistance further decreases. The exemplified materials of the first electrode 31 can be used as the conductive material.

The liquid permeability can be evaluated by Darcy's law of permeability (hereinafter, may be simply referred to as permeability). Typically, Darcy's law is used to represent the permeability of a porous medium, and is also applied to members other than porous materials for the sake of convenience. In the evaluation of a non-uniform and anisotropic member, permeability in a direction in which the lowest permeability is observed is adopted.

A Darcy's law permeability k (m2) of a member is calculated by an equation of a relationship with a permeation velocity (m/sec) of a liquid, which is represented by the following equation, based on a cross-sectional area S (m2) of the member through which the liquid having viscosity $\mu$ (Pa·sec) penetrates, a length L (m) of the member, and a pressure difference $\Delta P$ (Pa) between a liquid inlet side and a liquid outlet side of the member when the liquid permeates through the member at a flow rate Q (m3/sec).

$$\frac{Q}{S} = \frac{k}{\mu} \times \frac{\Delta P}{L} \qquad \cdots (1)$$

The permeability of the first electrode 31 is preferably greater than or equal to 100 times, more preferably greater than or equal to 300 times, and further more preferably greater than or equal to 1,000 times that of the second electrode 32. In a specific example where the relationship can be realized, the first electrode 31 is made from carbon felt, carbon paper or the like which is made from carbon fibers or the like having a fiber diameter greater than or equal to 1 $\mu$m, and the second electrode 32 is made from a carbon-nanotube sheet or the like which is made from carbon nanotubes or the like having a fiber diameter less than or equal to 1 $\mu$m. The permeability of the first electrode 31 represents a permeability in the in-plane direction, and the permeability of the second electrode 32 represents a permeability in the stacking direction (a normal direction of the in-plane direction).

As described above, the liquid outlet layer 33 preferably has a liquid permeability greater than that of the second electrode 32. The reason is that the electrolyte having passed through the second electrode 32 is required to be quickly exhausted to the exhaust path 24. The permeability of the liquid outlet layer 33 is preferably greater than or equal to 50 times, more preferably greater than or equal to 100 times, further more preferably greater than or equal to 300 times, and particularly preferably greater than or equal to 1,000 times that of the second electrode 32. For a specific example where the relationship can be realized, the exemplified materials of the first electrode 31 can be used as the material of the liquid outlet layer 33. The permeability of the second electrode 32 is as described above, and the permeability of the liquid outlet layer 33 represents the permeability in the in-plane direction.

[Operation of Redox Flow Cell]

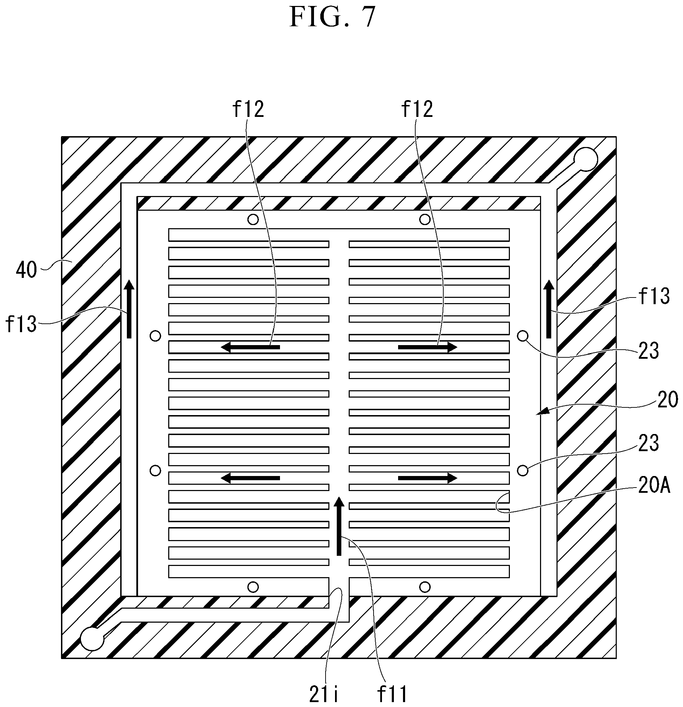

An example of an operation of the redox flow cell 100 will be described with reference to FIG. 7. FIG. 7 is a view illustrating a flow of the electrolyte in the redox flow cell 100 of the first embodiment.

The electrolyte is supplied into the electrode compartment K of the redox flow cell 100 from an inlet port provided in the cell frame 40. The electrolyte supplied into the electrode compartment K reacts with the electrode 30 in the electrode compartment K. Ions occurring at the reactions flow between the electrodes 30 via the ion-exchange membrane 10, and charge and discharge occurs. The electrolyte after the reactions is exhausted from an outlet port provided in the cell frame 40.

The electrolyte is supplied from the opening portion 21i of the peripheral edge wall 21 into the recessed portion 20A in the electrode compartment K (flow f11). The supplied electrolyte flows along the internal wall 22, and diffuses in the recessed portion 20A in the in-plane direction (flow f12). The electrolyte passes through the electrode 30, and is exhausted from the exhaust path 24 (flow f13).

As described above, in the redox flow cell of the embodiment, it is possible to avoid a positional shift of the electrode with respect to the current collector plate. For this reason, it is possible to prevent a positional shift of the electrode with respect to the current collector plate during assembly of the redox flow cell, and to prevent the electrolyte from flowing without passing through the electrode. That is, a decrease in the charge and discharge capacity of the redox flow cell can be suppressed.

[Production Method of Redox Flow Cell]

A production method of the redox flow cell of the embodiment is a production method of the redox flow cell including the ion-exchange membrane 10, the electrode 30 sequentially disposed so as to interpose the membrane therebetween, and the current collector plate 20 as illustrated in FIG. 1.

The production method of the redox flow cell of the embodiment can adopt any of the following two methods. A first method is a method of positioning the electrode 30 by inserting the electrode 30 with respect to the current collector plate 20 having the positioning pin 23. A second method is a method of stacking the current collector plate 20 and the electrode 30 on top of each other and then installing the positioning pin 23. If necessary, the first and second methods may be combined with each other. The product obtained by this combination is also included in the scope of the present invention.

First, the first method will be described. At first, the current collector body having an erect positioning pin on at least one principal surface thereof is prepared, or the positioning pin is installed on one principal surface of the current collector body not having the positioning pin. The principal surface is a surface facing the electrode.

In the method of using the current collector plate in which the positioning pin 23 is integrated with the current collector plate 20, first, the current collector plate 20 having the positioning pin 23 is prepared. The current collector plate 20 can be processed by a known method. In the method of using the current collector plate in which the positioning pin 23 is separated from the current collector plate 20 not having the positioning pin, first, the positioning pin 23 is installed at a predetermined position. The positioning pin 23 may be fitted in a recessed portion provided in the current collector plate 20, or may be bonded to the current collector plate with an adhesive or the like.

Next, the electrode 30 is stacked at a predetermined position on the surface on which the positioning pin 23 is formed. The positioning pin 23 is inserted into the electrode 30. Therefore, the electrode 30 loses the degree of freedom in the in-plane direction with respect to the current collector plate 20, and the position thereof in the in-plane direction is fixed.

The stacked body in which the electrode 30 and the current collector plate 20 are stacked is installed in the opening portion of the cell frame 40. Then, the ion-exchange membrane 10 is disposed so as to close the opening portion of the cell frame 40.

Then, the next cell frame 40 is stacked on the exchange membrane such that the positions of the opening portions of two cell frames 40 are aligned with each other with the disposed ion-exchange membrane 10 interposed therebetween. Then, the electrode 30 and the current collector plate 20 are sequentially stacked on the opening portion of the stacked cell frame 40. At this time, the position of the electrode 30 to be stacked in the in-plane direction with respect to the current collector plate 20 is also fixed by the positioning pin 23. The respective members are stacked so as to produce a single cell CE as shown in FIG. 1.

As necessary, a plurality of cells are stacked based on the single cell CE. At this time, the cells are stacked such that any one current collector plate 20 in the single cell CE is shared between the cells. Specifically, a new electrode 30 is disposed on the shared current collector plate 20 in the shared cell frame 40, and the ion-exchange membrane 10 is further disposed thereon. Another cell frame 40 is further stacked on the exchange membrane, and the electrode 30 and the current collector plate 20 are stacked in the opening portion of the cell frame. The stacked body is formed by repeating these steps. Preferably, the height of an edge of the cell frame 40 having a substantial frame shape may be such a height that two electrodes and one current collector plate can be accommodated in the cell frame.

The redox flow cell having a plurality of electrode compartments K is produced by stacking the required number of cells. As viewed from the cross section, in the opening portions of the plurality of cell frames 40, a combination of the current collector plate 20, the electrode 30, the ion-exchange membrane 10, and the electrode 30 is repeatedly stacked in this order a plurality of times.

On the other hand, the second method differs only in the timing at which the positioning pin 23 is installed. Other procedures are the same as the first method.

In the second method, first, the electrode 30 is stacked on one surface of the current collector plate 20. At this time, the positioning pin 23 is not provided on the current collector plate 20. The positioning pin 23 is installed from the electrode 30 side after the stacking. Since the electrode 30 is preferably made from carbon fibers, the positioning pin 23 can be installed on the current collector plate 20 through the electrode 30. In the second method, the positioning pin having the above-mentioned shape can be used, but when the shape is a conical, it is preferable that a tip end of the pin be provided in the current collector plate 20 and a bottom of the pin is located on the electrode 30 side.

Although a preferable embodiment of the present invention has been described above in detail, the present invention is not limited to a specific embodiment. Various modifications or changes may be made within the scope of the present invention in the claims.

Industrial Applicability

The present invention can suppress the shift of an electrode in an in-plane direction during assembly of a redox flow cell.

Reference Signs List

| | |
|---|---|
| 10 | ion-exchange membrane |
| 20, 20' | current collector plate |
| 20A | recessed portion |
| 21 | peripheral edge wall |
| 21a | first surface |
| 21i | opening portion |
| 22 | internal wall |
| 22a | first surface |
| 22b | side surface |
| 23 | positioning pin |
| 24 | exhaust path |
| 30 | electrode |
| 31 | first electrode |
| 32 | second electrode |
| 33 | liquid outlet layer |
| 40 | cell frame |
| 100 | redox flow cell |
| CE | single cell |
| K | electrode compartment |
| C | groove portion |
| C1 | first groove portion |
| C2 | second groove portion |
| f11 | flow of supplied electrolyte |
| f12 | flow of electrolyte diffusing in in-plane direction |
| f13 | flow of exhausted electrolyte |

**Claims**

1. A current collector plate, comprising:
   an erect positioning pin on at least one surface of the current collector plate.

2. The current collector plate according to Claim 1, further comprising:

   a peripheral edge wall surrounding a predetermined region on the at least one surface of the current collector plate,
   wherein the positioning pin is provided on a first surface of the peripheral edge wall provided on the at least one surface side.

3. The current collector plate according to Claim 1 or 2, wherein a first principal surface as the one surface and a second principal surface are provided, and the positioning pin is provided on both the principal surfaces.

4. A redox flow cell, comprising:

an ion-exchange membrane;
the current collector plate according to any one of Claims 1 to 3; and
an electrode disposed between the ion-exchange membrane and the current collector plate,
wherein a position of the electrode in an in-plane direction is fixed by the positioning pin of the current collector plate.

5. The redox flow cell according to Claim 4, wherein the electrode has a positioning hole at a position corresponding to the positioning pin.

6. A production method of a redox flow cell wherein the redox flow cell includes an ion-exchange membrane, electrodes sequentially disposed on both sides of the membrane so as to interpose the membrane therebetween, and a current collector plate, the method comprising:

a step of preparing a current collector plate having an erect positioning pin on at least one surface of the current collector plate, or installing a positioning pin on the one surface of a current collector plate; and
a step of stacking an electrode on a surface on which the positioning pin is formed, and fixing a position of the electrode in an in-plane direction.

7. A production method of a redox flow cell wherein the redox flow cell includes an ion-exchange membrane, electrodes sequentially disposed so as to interpose the membrane therebetween, and a current collector plate, the method comprising:

a step of stacking an electrode on one surface of a current collector plate; and
a step of fixing the current collector plate and the electrode by a positioning pin.

8. The current collector plate according to Claim 2, wherein the predetermined region is a recessed portion, and
a distance between an electrode and a surface of the recessed portion facing the electrode is longer than a distance between the electrode and a surface of the peripheral edge wall facing the electrode.

# FIG. 1

# FIG. 2

# FIG. 3

# FIG. 4

# FIG. 5

# FIG. 6

# FIG. 7

## INTERNATIONAL SEARCH REPORT

| International application No. |
| --- |
| PCT/JP2017/046928 |

**A. CLASSIFICATION OF SUBJECT MATTER**
Int.Cl. H01M8/0202(2016.01)i, H01M8/18(2006.01)i

According to International Patent Classification (IPC) or to both national classification and IPC

**B. FIELDS SEARCHED**

Minimum documentation searched (classification system followed by classification symbols)
Int.Cl. H01M8/0202, H01M8/18

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | Microfilm of the specification and drawings annexed to the request of Japanese Utility Model Application No. 10520/1981 (Laid-open No. 010378/1983) (SANYO ELECTRIC CO., LTD.) 22 January 1983, claims, fig. 4 (Family: none) | 1<br>2-8 |
| X<br>A | JP 2010-140755 A (HONDA MOTOR CO., LTD.) 24 June 2010, paragraphs [0009], [0021], [0024] (Family: none) | 1<br>2-8 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 February 2018 (26.02.2018) | 06 March 2018 (06.03.2018) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2017/046928

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-228364 A (SHOWA DENKO KABUSHIKI KAISHA) 17 December 2015 (Family: none) | 1-8 |
| A | JP 2003-504811 A (SQUIRREL HOLDINGS LTD.) 04 February 2003 & WO 01/03224 A1 & EP 1284513 A1 & CN 1316113 A | 1-8 |
| A | JP 2012-104237 A (SUMITOMO ELECTRIC INDUSTRIES, LTD.) 31 May 2012 (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016255378 A
- JP 2015122231 A

- JP 2015505147 W